# EUROPEAN PATENT SPECIFICATION

(11) **EP 2 753 680 B1**
(45) Date of publication and mention of the grant of the patent: **29.04.2015**
(21) Application number: 12737357.9
(22) Date of filing: 12.06.2012
(51) Int. Cl.: C11B 15/00, C11B 7/00, A23D 9/02

(54) **A METHOD FOR PRODUCING TRIACYLGLYCEROL OIL**
VERFAHREN ZUR HERSTELLUNG VON TRIACYLGLYCEROLÖL
PROCÉDÉ POUR LA PRODUCTION D'HUILE DE TRIACYLGLYCÉROL

(30) Priority: 09.09.2011 MY PI2011004268
(43) Date of publication of application: 16.07.2014
(73) Proprietor: Sime Darby Malaysia Berhad, Kuala Lumpur, 50350 (MY)
(72) Inventor: BIN MD.NOOR, Ahmadilfitri, Banting Selangor Darul Eh San 42700 (MY); BINTI OTHMAN, Noor Hidayu, Banting Selangor Darul Eh San 42700 (MY)
(74) Representative: Bassil, Nicholas Charles
(86) International application number: PCT/MY2012/000118
(87) International publication number: WO 2013/036096

(56) References cited:
- EP-A2- 0 081 881
- WO-A1-95/26391
- WO-A1-2010/055033
- US-A1- 2004 224 071

## Description

### Field of the Invention

The present invention relates to a method for producing triacylglycerol (TAG) oil. More particularly, the present invention relates to a method for producing a TAG oil containing 96.5% or more of triacylglycerol from refined palm oil.

### Background of the Invention

Palm oil, a well-balanced healthy edible oil, is now an important energy source for mankind. In today's context, the oil has been widely acknowledged as a versatile and nutritious vegetable oil, as well as a trans-fat free oil with a rich content of vitamins and antioxidants. Palm oil is available in a variety of forms: crude palm oil, palm olein, palm stearin, RBD palm oil, fractionated palm olein and palm mid-fraction. Refined palm oil is palm oil that has been refined, bleached and deodorised through a physical refinery process, such as through use of a distillation column. Like all oils, triacylglycerol (TAG) is a major constituent of palm oil. Normal palm oil usually contains about 95% to 96% of triacylglycerol, up to 5% of diacyglycerol (DAG) and other unsaponifiable matters such as free fatty acids, moisture, dirt and minor compositions of non-oil fatty matter.

High TAG oil is palm oil that contains higher TAG level than normal palm oil. Production of high TAG oil can produce an oil that is consistent, has predictable process control, and has higher stability for frying industry. Furthermore, high TAG oil is suitable for use as a diet supplement that can provide energy to human body and may be used for product in the weight management industry.

The prior art describes many methods for producing TAG oils from palm oil. One method is described in US 5,849,940, titled "Triglyceride fractionation" published on 15 December 1998 that describes a method of producing triglycerides with at least 12 wt % of SSU (S = saturated fatty acids; U = unsaturated fatty acids) to achieve an enrichment factor for the SSU enrichment of at least 1.5. The described method applies a two-step wet fractionation process starting from palm oil stearin with an organic solvent, such as hexane or acetone, yielding a stearin fraction that predominantly consist of SSS, SUS and SSU triglycerides. This stearin fraction is subjected to a second wet fractionation with an organic solvent (again hexane or acetone). The olein fraction is collected as the product enriched in SSU (at least 12 wt%). In another embodiment, olefin fraction from the first wet fractionation, which predominantly consists of UUU, SUU, SSU, and SUS triglycerides, is collected. This olein fraction is subjected to a second wet fractionation and stearin fraction is recovered as product triglycerides composition enriched in SSU. It is a problem in this method that there is a need to subject the oil to a two-step fractionation process to obtain the desired product.

Another method is described in EP 0081881, titled "A process for the solvent fractionation of palm oil stearines and products obtained with said process" published on 22 June 1983 that describes a method for producing triglycerides from palm oil stearin by solvent fractionation. The palm oil stearin is fractionated into three fractions. One fraction is comprised of triglycerides with a melting point above 45°C, a second fraction is comprised of triglycerides with a melting point between 33°C and 44°C and a third fraction is comprised of triglycerides with a low melting point and is an oil at room temperature. The fractionation is performed by mixing 1.0 to 6.0 ml of solvent per gram of fat at 50°C; cooling the solution obtained to 12°C to 14°C; collecting the precipitate formed; extracting the precipitate under specific conditions with solvent at a temperature of 10°C to obtain a slurry; filtering the slurry from the extraction step, resulting in a high melting product and a filtrate; cooling the filtrate to 1°C to 3°C and collecting the new precipitate obtained. The new precipitate is extracted again with fresh solvent under very specific conditions to obtain a second slurry. The second slurry is filtered to obtain an intermediate melting product and a second filtrate. The second filtrate is then subjected to a removal of the solvent to obtain the liquid oil. In this method, it is a problem that there is a need to undergo double extraction and filtration processes to obtain the end product of triglycerides.

A further method is described in WO 95/26391, titled "Fractionation of triglyceride oils" published on 5 October 1995 that describes a process for separating a solid fraction from a partially crystallised triglyceride oil. The process comprises the steps of heating the oil, slowly cooling and crystallising the triglyceride oil to obtain a solid stearin phase and a liquid olein phase and recovering the stearin phase by separating it from the olein phase. This process however requires an addition step of adding a crystallisation modifying substance to the oil before crystallisation of the oil begins.

It is therefore desirable to find an alternative method of producing a TAG oil that reduces the amount of steps needed in the process while simplifying each step and that produces a TAG oil with a higher content of triacylglycerol as compared to normal refined palm oil.

### Summary of the Invention

The above and other problems are solved and an advance in the art is made by a method for producing TAG oil from refined palm oil in accordance with this invention. It is an advantage of a method in accordance with this invention that the TAG oil produced in accordance with the method of the invention contains 96.5% or more of triacylglycerol. A second advantage of this invention is that the method reduces the amount of steps needed in the process while simplifying each step in obtaining a TAG oil with elevated TAG level than normal refined palm oil.

In accordance with an embodiment of this invention, the method is performed in the following manner. The method begins by heating an oil source containing triacylglycerol to a temperature between 45°C and 100°C. The oil source is rapidly cooled to a temperature in the range of 0°C to 35°C to form a solid fraction within the oil source. The solid fraction and the oil source are then maintained at the same crystallisation temperature for a period between 5 and 500 minutes before the solid fraction is separated from the oil source by filtration. The solid fraction obtained from the filtering contains 96.5% or more of triacylglycerol.

A solid fraction of an oil containing 96.5% or more of triacylglycerol, produced in accordance with the method of this invention, is provided.

### Description of the Invention

The present invention provides a process for producing a triacylglycerol (TAG) oil containing 96.5% or more of triacylglycerol, from refined palm oil.

According to the present invention, refined palm oil is first heated to a temperature between 45°C to 100°C, preferably between 50°C to 80°C, more preferably between 55°C to 75°C. The refined palm oil is heated to melt the oil before crystallization of the oil begins. The melted oil is cooled to a desired crystallization temperature through a fast cooling method. Any suitable fast cooling method may be used. Preferably, the melted oil is cooled in a freezer or other suitable refrigeration unit. The oil is cooled to a temperature between 0°C and 35°C, preferably between 5°C and 25°C, more preferably between 10°C to 20°C. Preferably, the time taken for the oil to cool to the predetermined temperature is between 5 and 200 minutes, more preferably between 10 and 150 minutes, even more preferably between 20 to 100 minutes. The cooling process is carried out by means of stagnant crystallization, that is, without any stirring of the oil. The cooling of the oil results in the formation of solid crystals within a liquid phase of the oil.

After the oil is cooled to the predetermined temperature, the oil is maintained at that temperature for a further period of time. Preferably, the oil is maintained at that temperature for a period between 5 and 500 minutes, more preferably between 25 and 450 minutes, even more preferably between 50 and 350 minutes. Maintaining the temperature of the oil for a predetermined period of time can result in the formation of more uniform solid crystals within the oil. Furthermore, the predetermined period of time allows for better solid-liquid interaction between the solid crystals and the liquid phase of the oil to reach equilibrium phase.

After the oil is cooled, the solid crystals and the liquid phase of the oil (or slurry oil) are separated. In accordance with one embodiment of the invention, separation is carried out by filtration. Prior to filtration, the temperature of filter press is set according to the predetermined temperature used for the cooling process to prevent the solid crystals from deforming when the solid crystals are transferred to the filter press. The pressing of the solid crystals is carried out at a pressure of 2 bar (2 x 10⁵ Pa), followed by 4 bar (4 x 10⁵ Pa) and finally 6 bar (6 x 10⁵ Pa) in the filling period of each pressure which is maintained for approximately 10 minutes. It takes about 30 minutes of pressing to separate the solid crystals from the slurry oil. One skilled in the art will recognize that other filtration methods may be used without departing from the invention and the exact method used is a design choice left to those skilled in the art.

After the solid crystals are separated from the slurry oil, the solid crystals (or solid fraction) and the slurry oil (or liquid fraction) are weighed to determine the yield of the separation process. The yield of the liquid fraction is the weight of the filtrate while the yield of the solid fraction is the weight of the crystal mass (cake) remaining on the filter cloth. The solid fraction and the liquid fraction obtained from the method are analysed to determine the iodine value (IV), the amount of triglycerides present, the slip melting point (SMP) and the solid fat content (SFC) of the respective fractions.

Iodine value indicates the degree of unsaturation of oil. It is measured according to MPOB test method p3.2:2004, a method described in Ainie et al., "Determination of Iodine Value (WJIS) for Palm Oil and Palm Oil Products", p3.2:2004. This method technically is equivalent to an industrial method described in ISO3961:1996, "Animal and Vegetable Fat and Oils". The standard iodine value of refined palm oil is IV 50-55; RBD palm stearin is IV 28-45 and RBD palm olein is IV 56-60.

Triglyceride (TG) is a chemical compound formed from one molecule of glycerol and three molecules of fatty acid. The TG composition is analyzed according to MPOB test method p3.3:2004, a method described in Ainie et al., "Method of Test for Palm Oil and Palm Oil Products: Determination of Triacylglycerol by Gas Cromatography: Section 1: Triacylglycerol Composition by Carbon Number", by using Agilent Technologies Gas Liquid Chromatograph (GLC) model Clarus 500. This method is also referred to as the IUPAC Method 2.321 (1987), a method described in "Determination of Mono-, Di-, and Triglycerides by Column Chromatograph", (1987).

The slip melting point (SMP) is a temperature at which a column of fat of specified length starts to rise in an open capillary tube. It is determined according to MPOB test method p4.2:2004, a method described in Ainie et al., "Method of Test for Palm Oil and Palm Oil Products: Determination of Slip Melting Point", p4.2:2004. The standard slip melting point of refined palm oil is 33°C to 39°C, RBD palm stearin is 47°C to 54°C, and RBD palm olein is 19°C to 24°C.

Solid fat content (SFC) is defined as the percentage of the total lipid which is solid at a particular temperature that influences many of its sensory and physical properties. It is measured according to MPOB test method p4.8:2004, a method described in "Determination of Solid Fat Content by Pulsed Nuclear Magnetic Resonance (pNMR) Section 1: Direct Method". The oil sample is analysed using a Bruker Minispec pulsed-Nuclear Magnetic Resonance (pNMR) Analyzer Model no. 120 (Hamburg German). This test is based on a test described in ISO8292:19 (E), "Animal and Vegetable Fats and Oils" and AOCS Official Methods Cd 16b-93, "Solid Fat Content at Low Resolution Nuclear Magnetic Resonance". The percentage of solid fat content of each fraction is measured as a function of temperatures. The standard solid fat content (SFC) of refined palm oil is about 26%, RBD palm stearin is about 25% to 71% at 20°C and RBD palm olein is about 0% to 9% at 20°C.

The following examples are provided to further illustrate and describe the particular specific embodiments of the present invention, and are in no way to be construed to limit the invention to the specific procedures, conditions or compositions described therein.

### EXAMPLES

### Example 1 : Production of high content TAG oil from RBDPO by filtration

Eight samples were prepared each containing 500g of refined palm oil. Each sample was heated at 60°C until the oil completely liquefied. The oil was then cooled in a freezer by means of stagnant crystallization until desired temperatures of 0°C, 5°C, 10°C, 15°C, 17°C, 20°C, 25°C and 30°C were reached. Each sample was then immediately pressed by a hydraulic filter press for 30 minutes in a filling period of about 10 minutes to separate the solid fraction formed during the crystallisation process from the liquid fraction. After the filtration, the separated fractions were weighted to measure the yield of the liquid fraction and the solid fraction. Oil analysis was also carried out to determine the physicochemical characteristic of the high TAG oil obtained by the method. The results of the yields obtained and the oil analysis were provided in TABLE 1.

It can be observed from Table 1 that the solid fraction of the oil or the solid palm oil contains elevated TAG level than normal refined palm oil. The highest percentage of triglyceride was recorded at a crystallisation temperature of 30°C, which was 97.21% as compared to normal refined palm oil of 96.16%. The yield obtained was 13.54 wt% of solid palm oil. At this temperature, solid palm oil has the lowest IV; 38.39, the highest SMP; 53°C and also the highest solid fat content (SFC), 62.85% at 20°C.

**TABLE 1**

| **Parameter** | **T = 0°C** | | **T =5°C** | | **T = 10°C** | | **T = 15°C** | | **T = 17°C** | | **T = 25°C** | | **T = 25°C** | | **T = 30°C** | |
|---|---|---|---|---|---|---|---|---|---|---|---|---|---|---|---|---|
| | **Palm oil** | **Solid palm oil** | **Palm oil** | **Solid palm oil** | **Palm oil** | **Solid palm oil** | **Palm oil** | **Solid palm oil** | **Palm oil** | **Solid palm oil** | **Palm oil** | **Solid palm oil** | **Palm oil** | **Solid palm oil** | **Palm oil** | **Solid palm oil** |
| **Yield (%)** | | 87.45 | | 86.07 | | 57 | | 37.29 | | 39.05 | | 25.62 | | 19.03 | | 13.54 |
| **IV** | 52.025 | 50.716 | 50.38 | 50.85 | 51.605 | 46.54 | 52.42 | 42.23 | 51.73 | 41.37 | 52.07 | 38.77 | 53.56 | 39, 03 | 51.86 | 38.29 |
| **SMP** | 37.97 | 39 | 38.03 | 39.17 | 38.33 | 43.87 | 39 | 50.67 | 38.17 | 50.47 | 38.97 | 51.27 | 37.73 | 52,4 | 37.57 | 53 |
| **TG**(%) : | | | | | | | | | | | | | | | | |
| **Total** | | | | | | | | | | | | | | | | |
| **TG(%)** | 96.2 | 96.91 | 95.45 | 96.42 | 95.86 | 96.65 | 95.13 | 96.2 | 95.69 | 96.92 | 95.98 | 96.92 | 96.26 | 96.96 | 96.16 | 97.21 |
| **DG(%)** | 3.07 | 3.8 | 5.73 | 3.58 | 4.14 | 3.34 | 4.87 | 3.8 | 4.29 | 3.09 | 4.02 | 3.07 | 3.73 | 3.03 | 3.85 | 2.8 |
| **SFC (%):** | | | | | | | | | | | | | | | | |
| **10°C** | 52.65 | 58.04 | 53.44 | 59.13 | 52.46 | 68.52 | 53.85 | 74.23 | 52.08 | 73.69 | 53.17 | 75.30 | 53.29 | 75,31 | 53.52 | 75.24 |
| **20°C** | 24.92 | 30.64 | 25.36 | 32.19 | 25.35 | 46.87 | 25.30 | 57.30 | 24.90 | 57.64 | 25.42 | 60.81 | 25.58 | 61.97 | 25.44 | 62.85 |
| **30°C** | 8.39 | 10.72 | 8.28 | 11.47 | 8.53 | 19.96 | 8.05 | 29.06 | 7.92 | 29.66 | 7.71 | 34.87 | 8.24 | 38.08 | 8.11 | 40.66 |
| **35°C** | 4.63 | 6.03 | 4.485 | 6.57 | 4.41 | 12.96 | 4.52 | 19.86 | 4.18 | 20.68 | 4.44 | 25.83 | 4.66 | 29.95 | 4.43 | 33.46 |
| **40°C** | 0.467 | 1.458 | 0.717 | 1.616 | 0.608 | 6.129 | 0.542 | 12.026 | 0.603 | 13.03 | 0.45 | 18.42 | 0.565 | 22.496 | 0.755 | 25.744 |

### Example 2 : Production of high content TAG oil by filtration

Example 1 was repeated by taken into consideration the holding time of the oil which has been cooled at two different crystallization temperature; 17°C and 30°C. The crystallization process was modified by maintaining the desired temperature at three different period of time to produce a constant solid phase palm oil before separating the solid fraction from the liquid fraction. The yield and oil analysis obtained were provided in TABLE 2.

The results shows that by maintaining the crystallization temperature for a certain period of time, the level of triglycerides in solid palm oil can be further increased by up to a minimum of 96.5%.

At a temperature of 17°C, the highest percentage of triglycerides obtained was 97.52% after maintaining the crystallization temperature at 17°C for 1 hour. Further maintenance of the crystallization temperature for up to 5 hours also resulted in a solid palm oil containing more than 97% of triglycerides.

At a temperature of 30°C, the highest percentage of triglycerides obtained was 98.17% after maintaining the crystallization temperature at 30°C for 5 hours. This indicates that the maximum elevated TAG can be obtained by maintaining the crystallization temperature for a certain period of time between different cooling temperatures. The trend of triglycerides increment between the three different periods of holding time shows the same pattern like the previous temperature.

**TABLE 2**

| Parameter | T = 17°C | | | | | T = 30°C | | | | |
|---|---|---|---|---|---|---|---|---|---|---|
| | Palm oil | 0 hr | 1 hr | 3 hr | 5 hr | Palm oil | 0 hr | 1 hr | 3 hr | 5 hr |
| | | Solid palm oil | Solid palm oil | Solid palm oil | Solid palm oil | | Solid palm oil | Solid palm oil | Solid palm oil | Solid palm oil |
| Yield(%) | | 35.71 | 35.35 | 44.02 | 52.09 | | 11.78 | 11.88 | 6.79 | 13.26 |
| IV | 52.55 | 40.02 | 37.85 | 42.46 | 43.68 | 51.74 | 36.86 | 36.59 | 31.86 | 29.52 |
| SMP | 38.1 | 51.4 | 50 | 47.9 | 44.4 | 38.6 | 51.3 | 53.5 | 55.5 | 55 |
| TG (%) : | | | | | | | | | | |
| Total : | | | | | | | | | | |
| TG (%) | 96.67 | 97.45 | 97.52 | 97.39 | 97.41 | 96.61 | 97.02 | 97.62 | 97.34 | 98.17 |
| DG (%) | 3.13 | 2.55 | 2.48 | 2.61 | 2.59 | 3.39 | 2.98 | 2.38 | 3.66 | 1.83 |
| SFC (%): | | | | | | | | | | |
| 10°C | 54.17 | 76.317 | 75.313 | 72.289 | 70.78 | 52.49 | 69.79 | 76.356 | 82.788 | 86.91 |
| 20°C | 25.15 | 60.289 | 58.25 | 52.914 | 49.39 | 24.61 | 54.011 | 64.116 | 73.948 | 78.93 |
| 30°C | 8.06 | 32.408 | 30.111 | 25.521 | 22.29 | 8.32 | 33.061 | 43.703 | 54.795 | 60.19 |
| 35°C | 3.92 | 21.265 | 19.273 | 15.686 | 13.07 | 3.70 | 23.6 | 34.192 | 43.387 | 48.68 |
| 40°C | 0.50 | 14.742 | 12.566 | 9.632 | 7.21 | 0.65 | 19.201 | 28.312 | 36.948 | 40.91 |

The above is a description of the subject matter the inventor regards as the invention and is believed that others can and will design alternative systems that include this invention based on the above disclosure.

## Claims

1. A method for producing a triacylglycerol oil, the method comprising:
heating an oil source containing triacylglycerol to a temperature between 45°C and 100°C;
rapidly cooling the oil source to a temperature in the range of 0°C to 35°C to form a solid fraction within the oil source;
holding the solid fraction and the oil source at the same temperature for a period between 5 and 500 minutes responsive to cooling the oil source; and
separating the solid fraction from the oil source by filtration, wherein the solid fraction contains 96.5% or more of triacylglycerol.

2. The method according to claim 1, wherein the solid fraction and the oil source are held for a period between 25 and 450 minutes.

3. The method according to claim 1, wherein the solid fraction and the oil source are held for a period between 50 and 350 minutes.

4. The method according to claim 1, wherein the oil source is cooled to a temperature in the range of 5°C to 25°C.

5. The method according to claim 1, wherein the oil source is cooled to a temperature in the range of 10°C to 20°C.

6. The method according to claim 1, wherein the oil source is cooled to the temperature within 5 to 200 minutes.

7. The method according to claim 1, wherein the oil source is cooled to the temperature within 10 to 150 minutes.

8. The method according to claim 1 where the oil source is cooled to the temperature within 20 to 100 minutes.

9. The method according to claim 1, wherein the oil source is heated to a temperature between 50°C and 80°C.

10. The method according to claim 1, wherein the oil source is heated to a temperature between 55°C and 75°C.

11. The method according to claim 1, wherein the oil source is selected from the group consisting of refined, bleached, deodorised palm oil (RBDPO) and crude palm oil (CPO).

## Patentansprüche

1. Verfahren zur Herstellung eines Triacylglycerinöls, wobei das Verfahren umfasst:
Erhitzen eines ölhaltigen Ausgangsstoffs, der Triacylglycerin enthält, auf eine Temperatur zwischen 45°C und 100°C;
schnelles Abkühlen des Ausgangsstoffs auf eine Temperatur im Bereich von 0°C bis 35°C, um eine feste Fraktion innerhalb des Ausgangsstoffs zu bilden;
Halten der festen Fraktion und des Ausgangsstoffs bei derselben Temperatur für einen Zeitraum zwischen 5 und 500 Minuten, der auf ein Abkühlen des Ausgangsstoffs anspricht; und
Abtrennen der festen Fraktion von dem Ausgangsstoff durch Filtration, wobei die feste Fraktion 96,5% oder mehr an Triacylglycerin enthält.

2. Verfahren gemäß Anspruch 1, wobei die feste Fraktion und der Ausgangsstoff für einen Zeitraum zwischen 25 und 450 Minuten gehalten werden.

3. Verfahren gemäß Anspruch 1, wobei die feste Fraktion und der Ausgangsstoff für einen Zeitraum zwischen 50 und 350 Minuten gehalten werden.

4. Verfahren gemäß Anspruch 1, wobei der Ausgangsstoff auf eine Temperatur im Bereich von 5°C bis 25°C abgekühlt wird.

5. Verfahren gemäß Anspruch 1, wobei der Ausgangsstoff auf eine Temperatur im Bereich von 10°C bis 20°C abgekühlt wird.

6. Verfahren gemäß Anspruch 1, wobei der Ausgangsstoff innerhalb von 5 bis 200 Minuten auf die Temperatur abgekühlt wird.

7. Verfahren gemäß Anspruch 1, wobei der Ausgangsstoff innerhalb von 10 bis 150 Minuten auf die Temperatur abgekühlt wird.

8. Verfahren gemäß Anspruch 1, wobei der Ausgangsstoff innerhalb von 20 bis 100 Minuten auf die Temperatur abgekühlt wird.

9. Verfahren gemäß Anspruch 1, wobei der Ausgangsstoff auf eine Temperatur zwischen 50°C und 80°C erhitzt wird.

10. Verfahren gemäß Anspruch 1, wobei der Ausgangsstoff auf eine Temperatur zwischen 55°C und 75°C erhitzt wird.

11. Verfahren gemäß Anspruch 1, wobei der Ausgangsstoff ausgewählt ist aus der Gruppe, bestehend aus raffiniertem, gebleichtem, desodoriertem Palmöl (RBDPO) und rohem Palmöl (CPO).

## Revendications

1. Une méthode pour produire une huile de triacylglycérol, cette méthode comprenant :
le chauffage d'une source d'huile contenant du triacylglycérol à une température comprise entre 45°C et 100°C ;
le refroidissement rapide de la source d'huile à une température comprise entre 0°C et 35°C afin de former une fraction solide dans la source d'huile ;
le maintien de la fraction solide et de la source d'huile à la même température pendant une durée comprise entre 5 et 500 minutes, adaptée pour refroidir la source d'huile ; et
la séparation de la fraction solide de la source d'huile par filtration, dans laquelle la fraction solide contient 96,5 %, ou plus, de triacylglycérol.

2. La méthode selon la revendication 1, par laquelle la fraction solide et la source d'huile sont maintenues pendant une durée comprise entre 25 et 450 minutes.

3. La méthode selon la revendication 1, par laquelle la fraction solide et la source d'huile sont maintenues pendant une durée comprise entre 50 et 350 minutes.

4. La méthode selon la revendication 1, par laquelle la source d'huile est refroidie à une température comprise entre 5°C et 25°C.

5. La méthode selon la revendication 1, par laquelle la source d'huile est refroidie à une température comprise entre 10°C et 20°C.

6. La méthode selon la revendication 1, par laquelle la source d'huile est refroidie à la température pendant une durée comprise entre 5 et 200 minutes.

7. La méthode selon la revendication 1, par laquelle la source d'huile est refroidie à la température pendant une durée comprise entre 10 et 150 minutes.

8. La méthode selon la revendication 1, par laquelle la source d'huile est refroidie à la température pendant une durée comprise entre 20 et 100 minutes.

9. La méthode selon la revendication 1, par laquelle la source d'huile est chauffée à une température comprise entre 50°C et 80°C.

10. La méthode selon la revendication 1, par laquelle la source d'huile est chauffée à une température comprise entre 55°C et 75°C.

11. La méthode selon la revendication 1, dans laquelle la source d'huile est sélectionnée dans le groupe consistant en huile de palme raffinée, blanchie et désodorisée (RBDPO) et en huile de palme brute (CPO).
